# EUROPÄISCHE PATENTSCHRIFT

(11) **EP 2 848 378 B1**
(45) Veröffentlichungstag und Bekanntmachung des Hinweises auf die Patenterteilung: **29.08.2018**
(21) Anmeldenummer: 14003188.1
(22) Anmeldetag: 15.09.2014
(51) Int. Cl.: B25J 15/04, B25J 19/00

(54) **WERKZEUGSCHNITTSTELLENSYSTEM**
TOOL INTERFACE SYSTEM
SYSTÈME D'INTERFACE D'OUTIL

(30) Priorität: 16.09.2013 DE 102013015256
(43) Veröffentlichungstag der Anmeldung: 18.03.2015
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 19 917 068
- DE-A1-102009 032 630
- DE-B3-102004 029 051
- DE-U1-202011 000 150
- US-A1- 2010 184 575
- Schunk: "Tool Changing - Quick Change System - SWS-L - SCHUNK", , 2. Oktober 2009 (2009-10-02), Seiten 30-107, XP055165653, Gefunden im Internet: URL:http://www.schunk.com/schunk_files/att achments/SWS-L_gesamtuebersicht_EN.pdf [gefunden am 2015-01-28]

## Beschreibung

Die Erfindung betrifft ein Werkzeugschnittstellensystem zur lösbaren, temporären Befestigung eines Werkzeuges oder eines Werkzeugaggregates an einem Handhabungsgerät, wobei das System aus einem handhabungsgeräteseitigen Flansch, einem werkzeug- oder werkzeugaggregateseitigen Flansch und mindestens einem Paar Übertragungsmodule besteht, wobei pro Paar ein Übertragungsmodul am handhabungsgeräteseitigen Flansch und ein Übertragungsmodul am werkzeug- oder werkzeugaggregateseitigen Flansch angeordnet ist und wobei die jeweiligen Übertragungsmodule eines Paares geeignet sind, untereinander Energie und/oder Signale auszutauschen.

Aus der DE 10 2009 032 630 A1 ist ein derartiges Schnittstellensystem bekannt. Allerdings sind hier die Übertragungsmodule im Einzelnen individuell gestaltet und benötigen einen überdurchschnittlich großen Bauraum.

In dem Prospektauszug Schunk: "Tool Changing-Quick Change System-SWS-L-Schunk" wird eine Werkzeugschnittstelle beschrieben, bei der die Übertragungsmodule in axialer Richtung über einen Vorsprung am jeweils tragenden Flansch angelegt und befestigt werden.

Aus den US 2010/184575 A1, der DE 199 17 068 A1 und der DE 20 2011 000 150 U1 sind Werkzeugschnittstellensysteme bekannt, bei denen die Übrteagungsmodule mittels Schrauben in radialer oder zumindest annähernd radielaer Richtung an den tragenden Flanschen festgeschraubt sind.

Der vorliegenden Erfindung liegt die Problemstellung zugrunde, ein zwischen einem Handhabungsgerät und einem Werkzeug oder Werkzeugaggregat angeordnetes Werkzeugschnittstellensystem zu entwickeln, an dessen Kupplungsflansche Übertragungsmodule für die Energie- und/oder Signalübertragung mit geringem Zeit- und Kostenaufwand angeordnet oder ausgetauscht werden können. Zudem sollen Übertragungsmodule und deren Verkabelung oder Verschlauchung bauraumsparend aufbaubar sein.

Diese Problemstellung wird mit den Merkmalen des Patentanspruchs 1 gelöst. Dabei weisen alle Übertragungsmodule jeweils einen Adapter auf, mit dem sie lösbar an dem sie tragenden Flansch an mindestens einer - in dessen radialer Außenfläche gelegenen - Befestigungszone direkt oder über eine Trägerplatte starr befestigbar sind. Der Adapter besteht jeweils aus zwei beabstandeten, senkrecht zur Befestigungszone orientierten Steckzapfen, wobei die Steckzapfen in entsprechende Ausnehmungen des sie tragenden Flansches und/oder der Trägerplatte einsteckbar sind. Die Steckzapfen verrasten in den Ausnehmungen beim Einstecken automatisch oder werden manuell mittels mindestens eines Fixierelementes festgelegt. Die Adapter aller Übertragungsmodule sind baugleich ausgeführt.

Unter einem derartigen Flansch ist nahezu jeder beliebige Adapter zu verstehen, der es ermöglicht, dass zwei Bauteile fluchtend lösbar aneinander gefügt werden können. Die zwischen den aneinander zur Anlage kommenden Montagefugen können z.B. plane, zylindrische, kegelige, pyramidale, sphärische oder ellipsoidale Flächen aufweisen. Hierbei können mehrere Flächentypen miteinander kombiniert werden. Diese Flächen können sich auch in die Montagefugen der Übertragungsmodule fortsetzen. Im Ausführungsbeispiel ist die Montagefuge nur beispielhaft eine Ebene.

Die Übertragungsmodule dienen der Übertragung von Energie und Signalen. Hierbei kann zwischen zwei paarweise angeordneten Modulen die Signalübertragung auf nahezu jede zur Zeit bekannte Art erfolgen. In manchen Ausführungsbeispielen hat das eine Übertragungsmodul die Funktion eines Sender, während das andere die Funktion eines Empfängers hat. In einem anderen Beispiel können die Übertragungsmodule während der Signalübertragung die Sender- und Empfängerfunktion z.B. protokollgesteuert tauschen. Somit ist auch eine bidirektionale Signalübertragung möglich.

Das Werkzeugschnittstellensystem gibt es in verschiedenen Größen. Unabhängig vom Durchmesser der handhabungsgeräteseitigen oder werkzeugseitigen Flansche werden an allen Flanschen oder Tragplatten Übertragungsmodule mit annähernd bauraumgleichen Gehäusen leicht austauschbar befestigt.

Weitere Einzelheiten der Erfindung ergeben sich aus den Unteransprüchen und der nachfolgenden Beschreibung schematisch dargestellter Ausführungsformen.
- Figur 1:: Perspektivische Ansicht eines Roboters mit einem roboterseitigen Flansch, der sechs Übertragungselemente aufweist;
- Figur 2:: Perspektivische Ansicht des am Roboter befestigten roboterseitigen Flansches mit sechs angedockten Übertragungselementen;
- Figur 3:: Perspektivische Ansicht des werkzeugseitigen Flansches mit sechs angedockten Ubertragungselementen;
- Figur 4:: Perspektivische Ansicht des werkzeugseitigen Flansches ohne Übertragungselemente;
- Figur 5:: Längsschnitt durch die beiden Flansche einer pneumatisch verriegelbaren Schnittstelle;
- Figur 6:: Längsschnitt durch den roboterseitigen Flansch mit pneumatisch entriegelten Verriegelungsbolzen;
- Figur 7:: Perspektivische Ansicht der Tragplatte;
- Figur 8:: Tragplatte mit einem Übertragungsmodul;
- Figur 9:: außermittiger Längsschnitt durch das in Figur 8 gezeigte Übertragungsmodul;
- Figur 10:: außermittiger Längsschnitt wie in Figur 9, jedoch mit abgewinkelt angeordnetem Gerätestecker;
- Figur 11:: Perspektivische Ansicht eines Übertragungsmoduls mit Blick auf den Gerätestecker;
- Figur 12:: wie Figur 11, jedoch mit Blick auf den Adapter;
- Figur 13:: Perspektivische Ansicht eines druckluftführenden Übertragungsmoduls, Ansicht des Adapters;
- Figur 14:: wie Figur 13, jedoch Ansicht der externen Druckluftanschlüsse.

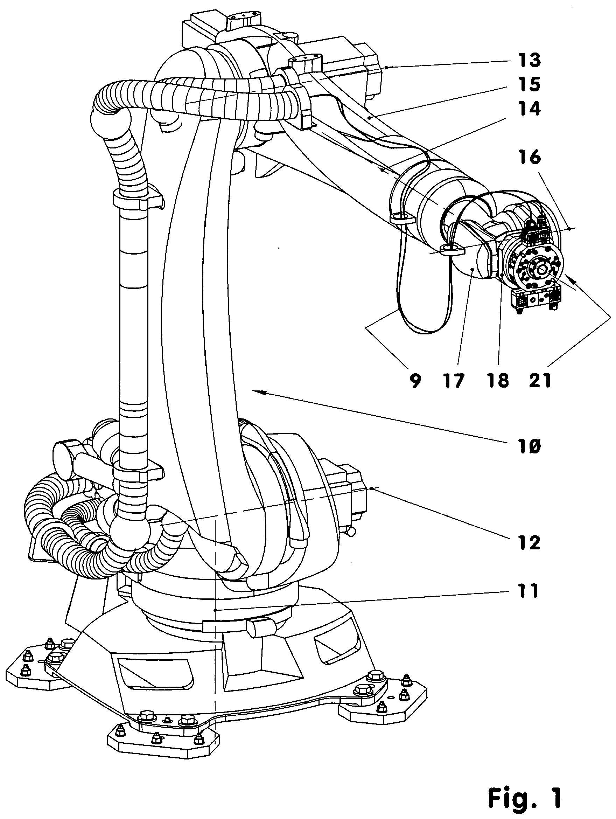

Die Figur 1 zeigt ein als Gelenkroboter ausgebildetes Handhabungsgerät (10) mit einer sogenannten RRR-Kinematik. Die serielle kinematische Struktur des Gelenkroboters (10) hat drei rotatorische Hauptachsen und zwei rotatorische Nebenachsen. Die Hauptachsen stellen die A-Achse (11), die B-Achse (12) und die C-Achse (13) dar. Die erste Nebenachse, die D-Achse (14), ist eine Rotationsachse. Sie besteht aus einem um seine Längsachse drehbaren Tragarm (15). Die zweite Nebenachse ist die E-Achse (16), deren Kupplungsarm (17) über eine Kupplung (18) den Roboterflansch (21) eines Werkzeugschnittstellensystems (20) um z.B. 270 Winkelgrade schwenkbar lagert.

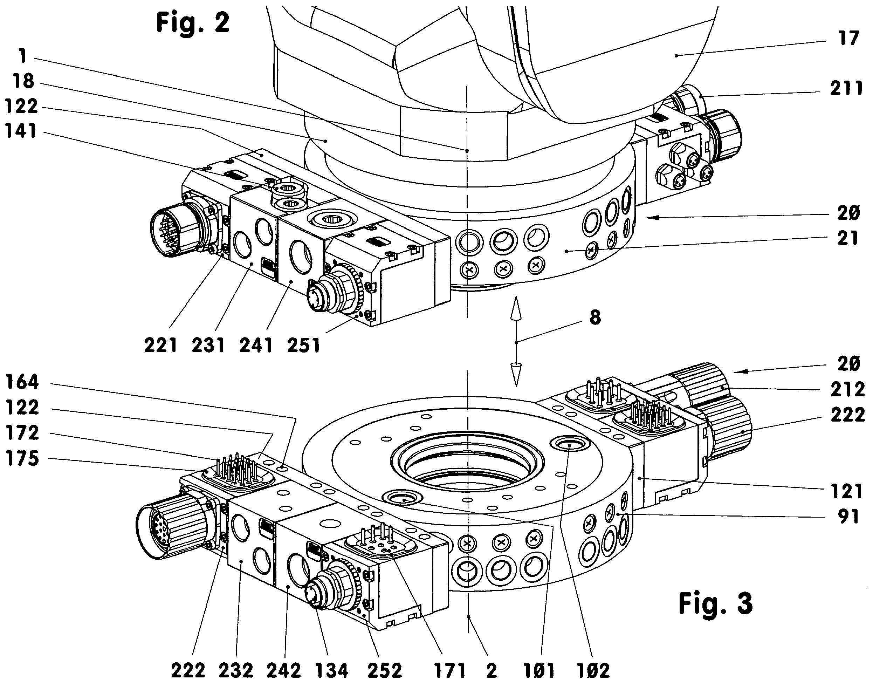

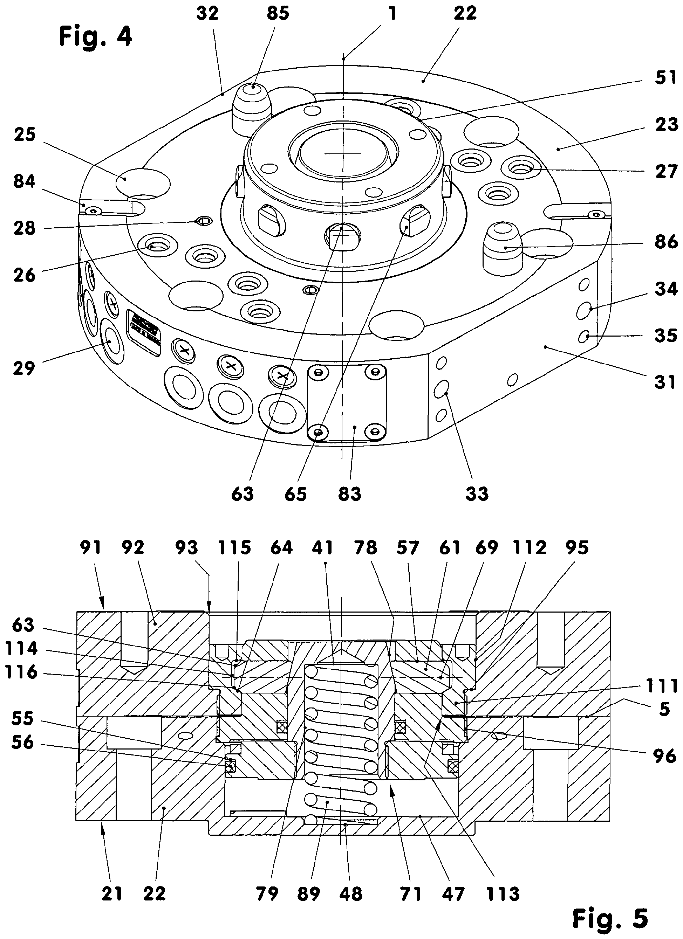

In der Figur 2 wird der untere Teil des Kupplungsarmes (17) gezeigt. An seinem freien Ende, der Kupplung (18), ist der roboterseitige Flansch (21) fest verschraubt. Nach Figur 4 besteht der Flansch (21) aus einem im Wesentlichen scheibenförmigen Grundkörper (22), der an seiner Frontstirnseite (23) einen z.B. zentralen Flanschzapfen (51) aufweist. Im Bereich des Flanschzapfens (51) ist im Grundkörper (22) eine Verriegelungsmechanik (41) angeordnet.

Die ebene Frontstirnseite (23) hat hier z.B. sechs Senkbohrungen (25), um den Flansch (21) mit dem Kupplungsarm (17) verschrauben zu können. Der Lochkreis der Senkbohrungen (25) ist nach ISO 9409-1 genormt. Er hat im Ausführungsbeispiel einen Durchmesser von 125 mm. Zwischen dem Lochkreis und dem Flanschzapfen (51) befinden sich 10 axiale große Bohrungen (26) und zwei kleinere axiale Bohrungen (28), über die dem Flansch (21) von außen her über radiale Gewindebohrungen (29) Druckluft zugeführt werden kann. Aus den großen Bohrungen (26) schauen einige zehntel Millimeter elastische Dichthülsen (27) heraus, über die die Bohrungen (26) an den entsprechenden Bohrungen des werkzeugseitigen Flansches (91) axial abdichten. Die Gewindebohrungen (29), die zu den kleinen, mittels Gewindestiften verschlossenen Bohrungen (28) führen, haben innerhalb des Grundkörpers (22) eine pneumatische Verbindung zu je einer Seite des Kolbens (71) der pneumatisch betätigbaren Verriegelungsmechanik (41).

Der Grundkörper (22), der hier bei einer Höhe von 32,5 mm einen Durchmesser von 160 mm hat, weist zwei plane Abflachungen (31, 32) auf, die parallel zueinander ausgerichtet sind. Im Bereich der Abflachungen (31, 32) hat der Grundkörper (22) eine Breite, die 143,4 mm misst. Jede Abflachung (31, 32) hat zwei Zentrierbohrungen (33, 34) und z.B. fünf mit Innengewinden ausgestattete Befestigungsbohrungen (35), von den zwei jeweils ober- und unterhalb der Zentrierbohrungen (33, 34) angeordnet sind. Die fünfte Befestigungsbohrung (35) liegt zwischen den beiden dem Flanschzapfen (51) entfernt gelegenen Befestigungsbohrungen (35).

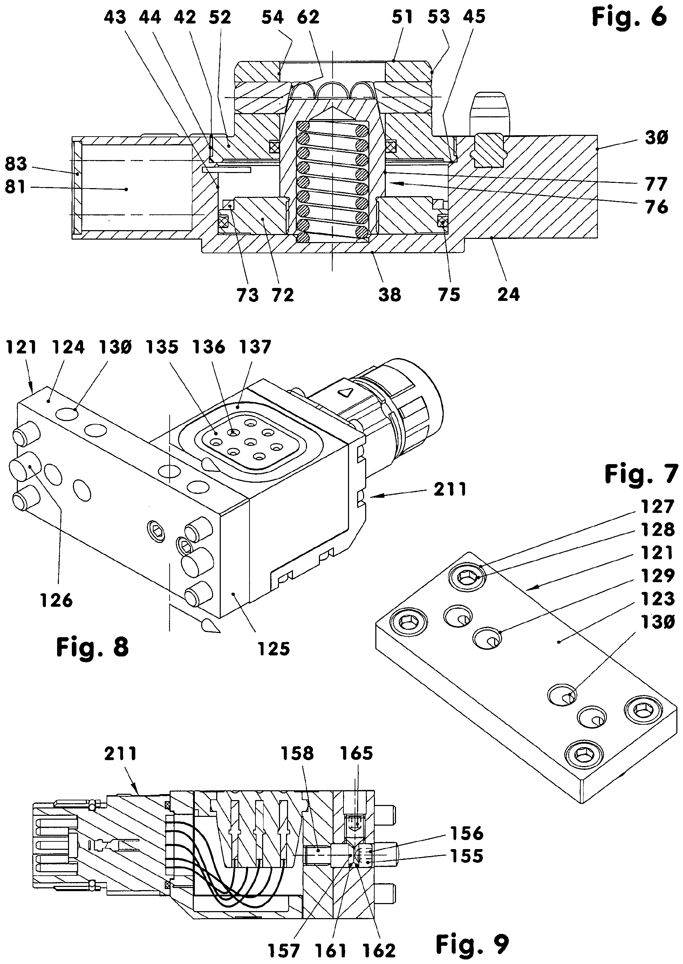

Mittig weist der Grundkörper (22) eine z.B. dreistufige Sacklochbohrung (42) auf, vgl. Figuren 5 und 6, in der die Verriegelungsmechanik (41) untergebracht ist. Die Sacklochbohrung (42) setzt sich aus einem Zapfensitz (44), einer Zylinderbohrung (43) und einer Federeinsenkung (48) zusammen. Der Zapfensitz (44) ist eine kurze Gewindebohrung, die in die Zylinderbohrung (43) über einen planen Anschlagbund (45) übergeht. Die feinbearbeitete Zylinderbohrung (43) hat bei einem planen Boden (47) eine Tiefe von 23 mm und einen Durchmesser von 70 mm. Die im Zentrum des Bodens (47) gelegene Federeinsenkung (48) ist nur wenige Millimeter tief.

Im Zapfensitz (44) ist der Flanschzapfen (51) eingeschraubt. Seine Unterseite liegt fest am Anschlagbund (45) an, vgl. Figur 6. Letzterer hat eine Flanschzone (52) und eine Zapfenzone (53). Beide Zonen (52, 53) werden von einer z.B. zylindrischen Kolbenführungsbohrung (54) durchdrungen. Die Oberseite der scheibenförmigen Flanschzone (52) bildet mit der Frontstirnseite (23) eine Ebene. Die darüber 23,8 mm hinausragende Zapfenzone (53) hat einen Durchmesser von 60 mm. Zwischen der zylindrischen Außenwandung der Zapfenzone (53) und der z.B. planen Stirnfläche des Flanschzapfens (51) befindet sich eine abgerundete Fase.

Die Kolbenführungsbohrung (54) hat einen Durchmesser von 32,5 mm. Im unteren Bereich weist sie eine Ringnut (55) auf, in der ein Dichtring (56) angeordnet ist. Circa mittig in der Zapfenzone (53) weist der Flanschzapfen (51) z.B. acht regelmäßig geteilt angeordnete Radialbohrungen (57) auf. In jeder der Bohrungen (57) sitzt ein Verriegelungsbolzen (61), dessen Durchmesser z.B. 10 mm beträgt.

Jeder Verriegelungsbolzen (61) hat an seinem in die Kolbenführungsbohrung (54) hineinragenden Ende eine Keilfläche (62), die mit der Mittellinie (1) des Bauteils (21) einen Winkel von 78 Winkelgraden einschließt. Das außen gelegene Ende des Verriegelungsbolzens (61) weist seitlich eine kurze z.B. 5 mm lange und 1 mm tiefe Abflachung (65) auf, vgl. Figur 4. Diese Abflachung (65) dient dem verdrehsicheren Positionieren in der Radialbohrung (57) und der Sicherung vor einem Herausfallen aus dieser Bohrung in einer nach außen gerichteten Radialrichtung. Der äußere Rand der Bohrung (57) ist in dem der Abflachung (65) gegenüber liegenden Bereich durch eine bleibende Deformation der Zapfenzone (53) so gezielt eingedrückt, dass sich der Verriegelungsbolzen (61) weder verdrehen kann, noch dass er in Radialrichtung mehr als 2,3 mm aus der Bohrung (57) herausragen kann.

Die äußere Stirnfläche des einzelnen Verriegelungsbolzens (61) weist zudem eine Einrastfläche (63) und eine Verriegelungsfläche (64) auf, vgl. Figuren 4 und 5. Die Einrastfläche (63) schließt mit der Mittellinie (1) einen Winkel von 45 Winkelgraden ein, während zwischen der Verriegelungsfläche (64) und der Mittellinie (1) 30 Winkelgrade eingeschlossen werden.

Zwischen dem Flanschzapfen (51) und dem Boden (47) ist ein Kolben (71) mit einer z.B. angebauten Kolbenstange (76) angeordnet, der pneumatisch betätigt in der Zylinderbohrung (43) auf- und ab bewegt werden kann, vgl. Figuren 5 und 6. Der Kolben (71) besteht aus einer Kolbenscheibe (72), die in einer Ringnut einen Dichtring (75) trägt. Im Bereich der kolbenstangenseitigen Stirnfläche trägt die Kolbenscheibe (72) einen magnetischen oder magnetisierbaren Schaltring (73), dessen Durchmesser nur minimal keiner ist als der der Kolbenscheibe (72). Mit seiner Hilfe kann ein im Grundkörper (22) eingebauter Sensor zumindest die jeweilige Kolbenendlage erfassen.
Die Kolbenscheibe (72) weist zentral ein Innengewinde auf, in die die hohle Kolbenstange (76) eingeschraubt ist. Die Kolbenstange (76) hat neben dem Gewindebereich einen Zylinderbereich (77) und einen Keilbereich (78). Die Höhe des Zylinderbereichs (77) beträgt im Ausführungsbeispiel z.B. 18 mm, während die Höhe des endseitigen Keilbereichs (78) 13 mm misst. Der Kegelwinkel des Keilbereichs (78) beträgt 24 Winkelgrade.

Die Kolbenstange (76) weist eine zentrale Bohrung (79) auf, in der eine Schraubendruckfeder (89) angeordnet ist. Die Schraubendruckfeder (89) sitzt zwischen der Federeinsenkung (48) des Grundkörpers (22) und dem Boden (47) der Bohrung (43). Die Druckfeder (89) drückt nach Figur 5 den Kolben (71) - sofern kolbenstangenseitig keine Druckluft anliegt - nach oben, wodurch die Verriegelungsbolzen (61) im Flanschzapfen (51) radial nach außen gedrückt werden.

Der Grundkörper (22) weist auf seiner im Wesentlichen planen Rückstirnseite (24) im Bereich des Bodens (47) einen zentralen Zentrierzapfen (38) auf, der bei einem Durchmesser von 80 mm eine Höhe von 4,5 mm hat. Über diesen Zentrierzapfen (38) wird der Flansch (21) an der Kupplung (18) zentriert.

Nach Figur 6 weist der Grundkörper (22) ein von der radialen Auswandung (30) aus radial eingearbeitetes Langloch (81) auf, das hier mit einem Deckel (83), vgl. auch Figur 4, verschlossen ist. In dem Langloch (81) kann ein Sensor untergebracht werden, der in Kombination mit dem Schaltring (73) der Kolbenscheibe (72) eine Kolbenstellungsabfrage ermöglicht.

Der Grundkörper (22) des Roboterflansches (21) weist nach Figur 4 z.B. zwei angespitzte Zentrierbolzen (85, 86) auf, die u.a. das auf das Werkzeug zu übertragende Drehmoment abstützen müssen. Die Zentrierbolzen (85, 86) haben in ihrem zylindrischen Bereich, der eine Höhe von 6 mm erreicht, einen Durchmesser von 12 mm. Der Spitzenwinkel der Zentrierbolzen (85, 86) misst 30 Winkelgrade. Die Zentrierbolzen (85, 86) schließen im Bezug auf die Flanschmittellinie (1) einen Winkel von 150 Winkelgrade ein. Hierbei sind die Zentrierbolzen (85, 86) gegenüber der Mittellinie (1) so positioniert, das jeder zur benachbarten Abflachung (31, 32) einen gleich kurzen Abstand aufweist.

Nach Figur 4 sind in der Frontstirnseite (23) von außen her zwei z.B. 4 mm tiefe, 16 mm lange und 8,2 mm breite Langlöcher (84) eingefräst. Sie dienen der Aufnahme von Näherungsschaltern, die das Andocken der Werkzeuge oder Werkzeugaggregate überwachen können.

Der werkzeug- oder werkzeugaggregateseitige Flansch (91), im Folgenden Werkzeugflansch genannt, hat einen Grundkörper (92), der mit Ausnahme der Zentrierorgane (51, 85, 86) baugleich ausgebildet ist. Anstelle der Sacklochbohrung (42) und des Flanschzapfens (51) weist er eine zentrale, einfach gestufte Durchgangsbohrung (93) und einen darin eingeschraubten Rastring (111) auf. Zudem hat der Grundkörper (92) anstelle der Zentrierbolzen (85, 86) entsprechende Zentrierbohrungen (101, 102).

Die Durchgangsbohrung (93), vgl. Figur 5, hat eine z.B. 24 mm tiefe Zylinderbohrung (94) mit einem Durchmesser von 80 mm, die in einem planen Auflagebund (95) endet. An den Auflagebund (95) schließt sich ein Innengewinde (96) an. Letzteres hat einen Innendurchmesser von z.B. 73,4 mm.

Der Rastring (111), der hier eine Höhe von 22 mm misst, weist auf seiner radialen Außenfläche einen zylindrischen Abschnitt (112) auf, der in der Bohrung (94) geführt ist. Nach Figur 5 liegt der Rastring (111) mit seinem zwischen dem Abschnitt (112) und seinem Außengewinde gelegenen Übergang fest auf dem Auflagebund (95) auf.

Der Rastring (111) hat eine zentrale Durchgangsbohrung (113), deren minimaler Innendurchmesser nur 0,05 mm größer ist als der Außendurchmesser der Zapfenzone (53) des roboterflanschseitigen Flanschzapfens (51). Im mittleren Bereich weist er eine z.B. 9 mm breite und 3 mm tiefe Rastringnut (114) auf, deren obere Nutflanke (115) in einer Ebene liegt, die normal zur Mittellinie (1) orientiert ist. Die untere Nutflanke (116) hat einen Kegelwinkel von 120 Winkelgraden, wobei die gedachte Spitze des Kegelwinkels nach Figur 5 auf der Mittellinie (1) im Bereich des Roboterflansches (21) liegt. Zusätzlich ist die untere Stirnfläche des Rastrings (111), zur Einführerleichterung beim Kuppelvorgang, im Übergangsbereich zur Durchgangsbohrung (113) mit einer breiten 45°-Fase ausgestattet.

Die Figuren 7 und 8 zeigen eine z.B. plane, kleine Trägerplatte (121) zur Aufnahme von zwei Übertragungsmodulen (211-252). Das in Figur 8 gezeigte Übertragungsmodul (211) gehört zu einem roboterseitigen Flansch (21). Die Trägerplatte (121), sie ist aus einer Aluminiumlegierung gefertigt, ist hier eine quaderförmige Platte, die zur Befestigung am jeweiligen Flansch (21, 91) zwei Zentrierstifte (126) und vier Senkbohrungen (127) aufweist. Die Abmessungen der Trägerplatte (121) betragen in Millimeter z.B. 71 * 32,5 * 10. Ihre Oberfläche ist hartcoatiert. In den Figuren 7 und 8 stecken in den Senkbohrungen (127) schon die M5-Senkschrauben (128). Die in der Nähe der schmalen Stirnseiten (125) gelegenen Senkbohrungen (127) und die Bohrungen für die Zylinderstifte (126) liegen auf einer Linie, die vom Plattenrand z.B. 5,5 mm entfernt ist.

In einer Ebene, die gegenüber der senkrecht zu den Mittelinien der Senkbohrungen (127) angeordneten Mittenlängsebene der Trägerplatte (121) um 0,25 mm versetzt ist, befinden sich als Adapter (151) zwei Paare der hier paarweise angeordneten, durchgehenden Steckzapfenausnehmungen (129). Der 0,25 mm-Versatz dient der haptischen Erkennung einer möglichen Falschmontage der Trägerplatte (121) am Flansch (21, 91).

Die Steckzapfenausnehmungen (129) haben hier einen Durchmesser von 6 mm. Der Abstand der Steckzapfenausnehmungen (129) eines Paares beträgt 10 mm. Die Mitten zweier benachbarter Paare haben z.B. einen Abstand von 35,75 mm. Die Durchmesser der Bohrungen der Zylinderstifte (126), der Steckzapfenausnehmungen (129) und der Steckzapfen (153, 154) sind so toleriert, dass jeder Adapter (151) von der theoretischen zwischen den Flanschen (21, 91) gelegenen Montagefugenebene (5) kleiner als 0,1 mm ist.

Senkrecht zu den Steckzapfenausnehmungen (129) befinden sich auf der langen Stirnseite (124) der Trägerplatte (121) pro Steckzapfenausnehmung (129) eine mit einem Innengewinde ausgestattete Klemmbohrung (130), vgl. Figur 8. Jede Klemmbohrung (130) ist von der Frontseite (123) der Trägerplatte (121) z.B. 5,3 mm entfernt, vgl. Figur 9.

Die paarweise verwendeten Steckzapfen (153, 154) sind als Teile der Übertragungsmodule(211-252) speziell gefertigte, gasnitrierte Sonderschrauben. Nach Figur 9 bestehen sie aus einem 10 mm langen zylindrischen, feinbearbeiteten Kopf (155), an den ein 6,5 mm kurzer M5-Gewindeschaft (158) angeformt ist. Die Härte der Kopfrandschicht beträgt HV 650+100. In der freien Stirnseite des Kopfes (155) ist eine Werkzeugausnehmung, z.B. ein Innensechskant mit der Schüsselweite von 3 mm eingearbeitet. 3,25 mm von der Stirnfläche entfernt, befindet sich eine umlaufende Klemmnut (157) in der zylindrischen Wandung des Kopfes (155). Die 2,5 mm breite Klemmnut (157) ist hier eine umlaufende Kerbe, deren beiden Nutflanken (161, 162) die Form eines Kegelstumpfmantels aufweisen. Die Nutflanken (161, 162) schließen einen Winkel von 90 Winkelgrade ein. Der Nutgrund ist mit einem 0,1 mm-Radius ausgerundet.

Selbstverständlich ist es auch möglich, die radiale Außenwandung des Kopfes (155), zumindest bereichsweise, mit Querschnitten auszubilden, die regelmäßig vieleckig sind oder einen anderen beliebigen Querschnitt aufweisen.

Sobald ein Übertragungsmodul (211-252) mit seinen Steckzapfen (153, 154) in die entsprechenden Steckzapfenbohrungen (129) eingesteckt ist, wird mindestens einer der Steckzapfen (153, 154) mit einer Klemmschraube (165) fixiert. Die mittels eines Imbusschraubendrehers anziehbare Klemmschraube (165) ist ein Gewindestift nach DIN 914. Der z.B. 8 mm lange Gewindestift hat eine kegelige Spitze, deren Kegelwinkel 90 Winkelgrade misst. Nach den Figuren 8 und 9 trifft die Mittellinie der Klemmschraube (165) nicht die Klemmnutmitte. Die Spitze der Klemmschraube (165) kontaktiert im fest angezogenen Zustand nur die vordere Nutflanke (162) der Klemmnut (157). Auf diese Weise berühren sich zwei Kegelmantelflächen in einem durch Materialnachgiebigkeit verbreiterten Linienkontakt. Es entsteht hier ein Keilgetriebe. Die Klemmkraft der Klemmschraube (165) zieht über den Steckzapfen (153, 154) das Übertragungsmodul (211-252) gegen die Frontseite (123) der Trägerplatte (121).

In den Figuren 8, 9, 11 und 12 ist ein roboterseitiges Übertragungsmodul (211) dargestellt, das z.B. der Laststromübertragung dient. Das Übertragungsmodul (211) hat einen quaderförmigen, 40 mm langen Basiskörper (131), der zumindest sechs annähernd plane Seitenflächen (144-149) aufweist. An zwei aneinander angrenzenden Seitenflächen (145, 147) ist der Basiskörper (131) mit einem aus einer Aluminiumlegierung gefertigten Abdeckwinkel (132) abgedeckt. Zwischen dem Abdeckwinkel (132) und dem Basiskörper (131) ist eine Papierdichtung eingelegt. Der Abdeckwinkel (132) ist mit dem Basiskörper (131) über acht Schrauben verschraubt.

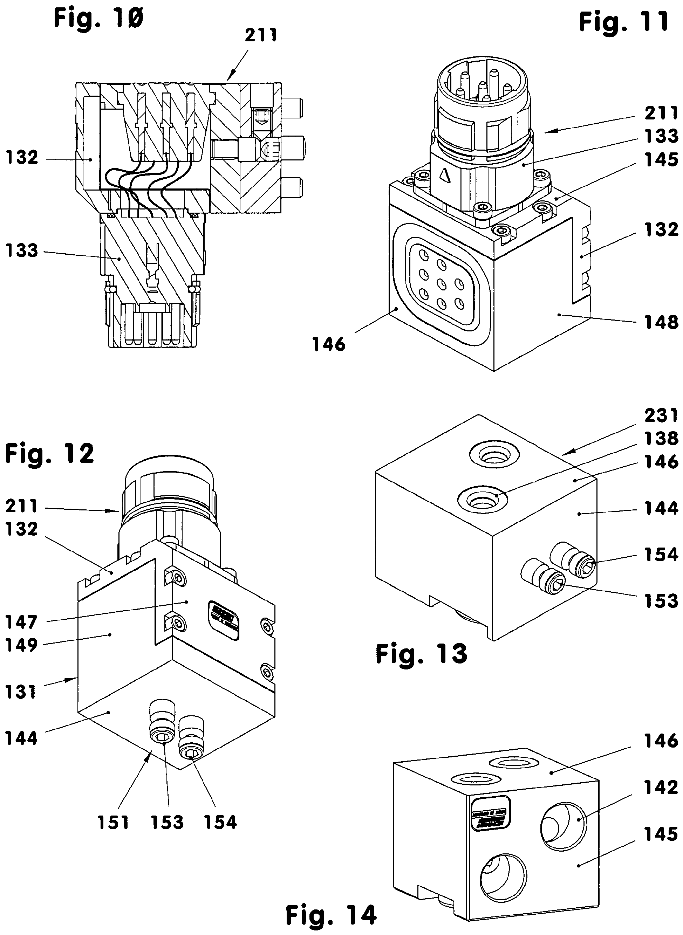

Die erste Seitenfläche (145) trägt hier einen Gerätestecker (133), während die andere den Basiskörper (131) staubdicht abdeckt und z.B. ein Unternehmenslogo trägt. Die beiden Seitenflächen (148, 149) des Basiskörpers (131), von denen je zwei Seitenkanten an dem Abdeckwinkel (132) anliegen, haben keine besondere Verwendung. Zwischen diesen Seitenflächen (148, 149) und direkt anschließend an die Abdeckwinkelseite mit dem Gerätestecker (133) liegt eine Seitenfläche (146), die acht Buchsen (136) aufweist. Die Buchsen (136) gehören zu einem im Basiskörper (131) eingeklipsten isolierenden Kontakteträger (135), vgl. Figuren 9 und 10.

Um die Gruppe der Buchsen (136) herum ist eine plane, glatte, rechteckige Dichtfläche (137) angeordnet, die der Auflage der Dichtlippen (175) der Gegenstücke (212, 222, 252) dient.

Bei den werkzeugflanschseitigen Übertragungsmodulen (212, 222, 252) werden in den Kontakteträgern (171), anstelle der Buchsen (136), herausragende Stifte (172) verwendet. Um die gruppenweise angeordneten Stifte (172) herum ist hier jeweils eine rechteckige, in den Ecken abgerundete Dichtlippe (175) angeordnet. Letztere legt sich beim Kuppeln der Flansche (21, 91) staub- und gasdicht an dem jeweiligen Gegenstück (211, 221, 251) an. Auf diese Weise wird für die Übertragungsmodule (211-252) die Schutzklasse IP 67 erreicht.

Die letzte Seitenfläche (144) trägt den schon beschriebenen Adapter (151) mit den zwei Steckzapfen (153, 154). Diese Seitenfläche (144) hat in Millimeter die Abmessungen 35,25 * 32,5, wobei eine zwischen den Steckzapfen (153, 154) gelegene, die Mittellinien der beiden Steckzapfen (153, 154) verbindende, Linie parallel zu den beiden längeren Seitenkanten des Basiskörpers (131) ausgerichtet ist.

Nach Figur 10 ist bei dem aus Figur 9 bekannten Übertragungsmodul (211) der Abdeckwinkel (132) mit dem von ihm getragenen Gerätestecker (133) um 90 Winkelgrade geschwenkt montiert. Auf diese Weise ist es platzsparend möglich, das Steckerkabel zunächst parallel zur Flanschmittellinie (1) am Kupplungsarm (17) des Roboters (10) entlangzuführen.

In den Figuren 13 und 14 ist ein roboterseitiges Übertragungsmodul (231) dargestellt, mit dessen Hilfe die Druckluft zweier Pneumatikleitungen an das entsprechende Gegenstück (232), vgl. Figur 3, des Werkzeugflansches (92) weitergegeben wird. Das Übertragungsmodul (231) ist ein quaderförmiger, aus einer Aluminiumlegierung gefertigter Klotz mit den Abmessungen 40 * 35,25 * 32,5 in Millimetern. Auf der hinteren Seitenfläche (144) trägt er seine Steckzapfen (153, 154). Die Seitenfläche (145), vgl. Figur 14, weist zwei Gewindebohrungen (139) auf, in die Druckluftanschlüsse eingeschraubt werden können.

Die in Figur 13 obere Seitenfläche (146), sie gelangt in den Kontakt mit dem gegenüber gelegenen Übertragungsmodul (232), vgl. Figur 2, trägt zwei elastische Dichthülsen (138), die über die Seitenfläche (146) mehrere zehntel Millimeter überstehen. Auf der unteren Seitenfläche (147), vgl. Figur 2, sind zwei druckluftführende Bohrungen mit Verschlussschrauben (141) abgedichtet.

Die Figur 2 zeigt einen montierten Roboterflansch (21), während die Figur 3 einen dazu passenden Werkzeugflansch (91) darstellt. Im vorderen Bereich tragen die Flansche (21, 91) je eine lange Trägerplatte (122). Jede Trägerplatte (122) weist einen Teil eines Übertragungsmodulpaares (211, 212; 221, 222; 231, 232; 241, 242; 251, 252) auf. Das erste Paar (221, 222) besteht aus einem roboterseitigen Gerätestecker und einem werkzeugseitigen Gerätebuchse. Das Paar dient der 19-poligen Übertragung von elektrischen Signalen. Am Gerätestecker wird ein Kabel angeschlossen, das die Signale über den Roboter (10) an das Übertragungsmodul (221) heranführt. Ebenso ist an die werkzeugseitige Gerätebuchse ein Kabel anschließbar, das zu dem Werkzeug oder dem Werkzeugaggregat führt. Werden die Flansche (21, 91) gekuppelt, verbinden sich Stifte (172) des werkzeugseitigen Übertragungsmoduls (222) elektrisch leitfähig mit den internen Gegenstücken des roboterseitigen Übertragungsmoduls (221).

Das danebenliegende Übertragungsmodulpaar (231, 232) dient der Übertragung von Druckluft über zwei Leitungen. Das roboterseitige Übertragungsmodul (231) kontaktiert über seine überstehende Dichthülse gasdicht die gegenüberliegende Planfläche des werkzeugseitigen Übertragungsmoduls (232). Das dritte Übertragungsmodulpaar (241, 242) hat die Aufgabe das Werkzeug an eine roboterseitige Vakuumleitung anzuschließen. Das vierte Übertragungsmodulpaar (251, 252) versorgt das Werkzeug oder Werkzeugaggregat mit Laststrom.

Auf der gegenüberliegenden Seite der Flansche (21, 91) sind zwei kurze Trägerplatten (121) angeordnet, die die Aufnahme von zwei Übertragungsmodulpaaren (211, 212; 221, 222) zur Signal- und Laststromübergabe ermöglichen.

Alle Trägerplatten (121, 122) sind nach den Figuren 2 und 3 so an den Flanschen (21, 91) montiert, dass die Gewindebohrungen (164) der Klemmschrauben (165) in oder vor der Montagefugenebene (5) enden.

Zum Ankuppeln eines Werkzeuges oder Werkzeugaggregates wird der Kupplungsarm (17) des Roboters (10) mit seiner Frontstirnseite (23) voraus in Richtung Werkzeugmagazin bewegt. In Letzterem ist das Werkzeug oder das Werkzeugaggregat so positioniert, dass seine Frontstirnfläche (97) frei zugänglich ist. Der Roboterflansch (21) wird bei der Annäherung an den Werkzeugflansch (91) in den letzten drei bis vier Zentimetern der Annäherungsbahnkurve so geführt, dass die Mittellinien (1, 2) der Flansche (21, 91) zueinander fluchten. Zugleich fluchten auch die Mittellinien der Zentrierbolzen (85, 86) mit den Mittellinien der Zentrierbohrungen (101, 102).

Während der Annäherung wird der Kolben (71) der Verriegelungsmechanik (41) des Roboterflansches (21) kolbenstangenseitig über eine der Radialbohrungen (29) mit Druckluft versorgt. Dadurch fährt der Kolben (71) gegen die Wirkung der Schraubendruckfeder (89) ein, wodurch die Verriegelungsbolzen (61) vom Keilbereich (78) der Kolbenstange (76) freikommen. Sie können nun komplett in ihre Führungsbohrungen (57) zurückweichen.

Dies geschieht spätestens zu dem Zeitpunkt, an dem der Flanschzapfen (51) den Rastring (111) des Werkzeugflansches (91) passiert.

Unmittelbar nach dem gegenseitigen Kontaktieren der beiden Frontstirnflächen (23,97) der Flansche (21, 91) erkennen die in den Langlöchern (84) sitzenden Näherungsschalter die erfolgte Positionierung und stellen die kolbenstangenseitige Druckluftzufuhr ab. Ggf. wird zeitgleich im Verriegelungsmechanismus (41) die kolbenbodenseitige Druckluftzufuhr betätigt, um die Schraubendruckfeder (89) dabei zu unterstützen, über den Keilbereich (78) der Kolbenstange (76) die Verriegelungsbolzen (61) nach außen zu drücken, damit deren Verriegelungsflächen (64) die kegelstumpfförmige Nutflanke (116) der Rastringnut (114) klemmend hintergreifen.

Während des letzten Bahnkurvenabschnitts sind zudem die Zentrierbolzen (85, 86) in die Zentrierbohrungen (101, 102) geglitten. Sobald die Zylinderabschnitte (87) der Zentrierbolzen (85, 86) die Zentrierbohrungen (101, 102) zu kontaktieren beginnen, gleiten auch die Steckerausnehmungen (136) der Übertragungsmodule (211, 221, 231, 241, 251) des Roboterflansches (21) über die Stifte (172) der Übertragungsmodule (212, 222, 232, 242, 252) der des Werkzeugflansches (91).

Um ein einzelnes z.B. schadhaftes Übertragungsmodul auszutauschen, müssen an ihm nur die Steck- oder Schraubverbindungen für die Kabel oder Leitungen gelöst werden. Anschließend werden von der gut zugänglichen Frontstirnseite (23, 97) aus an der Trägerplatte (121, 122) pro Übertragungsmodul zwei Klemmschrauben (165) gelöst. Nun kann das Übertragungsmodul von seinem Adapter (151) abgezogen werden, um es ohne eine Beeinträchtigung der Nachbarmodule auswechseln zu können.

### Bezugszeichenliste:

- 1: Mittellinie des Roboterflansches
- 2: Mittellinie des Werkzeugflansches
- 5: Montagefugenebene, theoretisch
- 8: Kontaktierungsrichtung
- 9: Verkabelung, exemplarisch

- 10: Handhabungsgerät, Roboter
- 11: A-Achse
- 12: B-Achse
- 13: C-Achse
- 14: D-Achse
- 15: Tragarm
- 16: E-Achse
- 17: Kupplungsarm
- 18: Kupplung

- 20: Werkzeugschnittstellensystem, System

- 21: Flansch, handhabungsgeräteseitig, Roboterflansch
- 22: Grundkörper
- 23: Frontstirnseite, Frontstirnfläche
- 24: Rückstirnseite
- 25: Senkbohrungen
- 26: Bohrungen, groß, axial, luftführend
- 27: Dichthülsen
- 28: Bohrungen, klein, axial, luftführend
- 29: Gewindebohrungen, radial; Gewindeanschlüsse
- 30: Außenfläche, radial
- 31, 32: Abflachungen, Befestigungszone
- 33, 34: Zentrierbohrungen
- 35: Befestigungsbohrungen mit Innengewinde
- 38: Zentrierzapfen

- 41: Verriegelungsmechanik
- 42: Sacklochbohrung
- 43: Zylinderbohrung
- 44: Zapfensitz mit Innengewinde
- 45: Anschlagbund
- 47: Boden, plan
- 48: Federeinsenkung

- 51: Flanschzapfen
- 52: Flanschzone
- 53: Zapfenzone
- 54: Kolbenführungsbohrung
- 55: Ringnut für Dichtring
- 56: Dichtring, Quadring
- 57: Radialbohrungen, Führungsbohrung
- 58: Fase

- 61: Verriegelungsbolzen
- 62: Keilfläche
- 63: Einrastfläche
- 64: Verriegelungsfläche
- 65: Abflachung
- 69: Mittellinie

- 71: Kolben
- 72: Kolbenscheibe
- 73: Schaltring
- 74: Ringnut
- 75: Dichtring, Quadring
- 76: Kolbenstange
- 77: Zylinderbereich
- 78: Keilbereich, Kegelstumpf
- 79: Bohrung, zentral

- 81: Langloch für Sensor
- 83: Deckel
- 84: Langloch für Näherungsschalter
- 85, 86: Zentrierbolzen
- 87: Zylinderabschnitt
- 89: Schraubendruckfeder

- 91: Flansch, werkzeug- oder werkzeugaggregateseitig; Werkzeugflansch
- 92: Grundkörper
- 93: Durchgangsbohrung
- 94: Zylinderbohrung
- 95: Auflagebund
- 96: Innengewinde
- 97: Frontstirnseite

- 101, 102: Zentrierbohrungen

- 111: Rastring
- 112: Abschnitt, zylindrisch

- 113: Durchgangsbohrung
- 114: Rastringnut
- 115: Nutflanke, oben
- 116: Nutflanke, unten, kegelstumpfförmig

- 121: Trägerplatte, klein
- 122: Trägerplatte, groß
- 123: Frontseite, dem Übertragungsmodul zugewandt
- 124: Stirnseite, lang, der Montagefugenebene (5) zugewandt
- 125: Stirnseite, klein
- 126: Zentrierstifte
- 127: Senkbohrungen
- 128: Senkschrauben, M5
- 129: Steckzapfenausnehmung, paarweise; Ausnehmung, Bohrung
- 130: Klemmbohrung

- 131: Basiskörper
- 132: Abdeckwinkel
- 133: Gerätestecker
- 134: Gerätebuchse
- 135: Kontakteträger
- 136: Buchsen, Steckerausnehmung
- 137: Dichtfläche, umlaufend
- 138: Dichthülsen
- 139: Gewindebohrungen

- 141: Verschlussschrauben
- 142: Luftanschluss

- 144: Seitenfläche für Adapter
- 145: Seitenfläche für Gerätestecker, Gerätebuchse, Luftanschlüsse
- 146: Seitenfläche für Energie- oder Signalübergabe
- 147: Seitenfläche für Logo
- 148: Seitenfläche, die 2-mal Abdeckwinkel kontaktiert
- 149: Seitenfläche, die 2-mal Abdeckwinkel kontaktiert

- 151: Adapter
- 153, 154: Steckzapfen
- 155: Kopf
- 156: Werkzeugausnehmung
- 157: Klemmnut, Klemmkerbe
- 158: Gewindeschaft
- 161, 162: Nutflanken; hinten, vorn
- 164: Gewindebohrung
- 165: Klemmschraube
- 171: Kontakteträger
- 172: Stifte
- 175: Dichtlippe, umlaufend

- 211: Übertragungsmodul, 8-polig für die Laststromübertragung, roboterseitig
- 212: Übertragungsmodul, 8-polig für Laststromübertragung, werkzeugseitig
- 221: Übertragungsmodul, 19-polig für Signalübertragung, roboterseitig
- 222: Übertragungsmodul, 19-polig für Signalübertragung, werkzeugseitig
- 231: Übertragungsmodul, Durchgang für die Vakuumübertragung roboterseitig
- 232: Übertragungsmodul, Durchgang für die Vakuumübertragung werkzeugseitig
- 241: Übertragungsmodul, zwei Durchgänge für die Druckluftübertragung, roboterseitig
- 242: Übertragungsmodul, zwei Durchgänge für die Druckluftübertragung, werkzeugseitig
- 251: Übertragungsmodul, 4-polig für die Laststromübertragung, roboterseitig
- 252: Übertragungsmodul, 4-polig für Laststromübertragung, werkzeugseitig

## Patentansprüche

1. Werkzeugschnittstellensystem (20) zur lösbaren, temporären Befestigung eines Werkzeuges oder eines Werkzeugaggregates an einem Handhabungsgerät (10),
- wobei das System (20) aus einem handhabungsgeräteseitigen Flansch (21), einem werkzeug- oder werkzeugaggregateseitigen Flansch (91) und mindestens einem Paar (211, 212; 221, 222; 231, 232; 241, 242; 251, 252) Übertragungsmodule (211-252) besteht,
- wobei pro Paar (211, 212; 221, 222; 231, 232; 241, 242; 251, 252) ein Übertragungsmodul (211, 221, 231, 241, 251) am handhabungsgeräteseitigen Flansch (21) und ein Übertragungsmodul (212, 222, 232, 242, 252) am werkzeug- oder werkzeugaggregateseitigen Flansch (91) angeordnet ist,
- wobei die jeweiligen Übertragungsmodule (211-252) eines Paares (211, 212; 221, 222; 231, 232; 241, 242; 251, 252) geeignet sind, untereinander Energie und/oder Signale auszutauschen,
- wobei alle Übertragungsmodule (211-252) jeweils einen Adapter (151) aufweisen, mit dem sie lösbar an dem sie tragenden Flansch (21, 91) an mindestens einer - in dessen radialer Außenfläche (30) gelegenen - Befestigungszone (31, 32) direkt oder über eine Trägerplatte (121, 122) starr befestigbar sind,
- wobei die Adapter (151) aller Übertragungsmodule (211-252) baugleich ausgeführt sind,
**dadurch gekennzeichnet,**
- **dass** der Adapter (151) jeweils aus zwei beabstandeten, senkrecht zur Befestigungszone (31, 32) orientierten Steckzapfen (153, 154) besteht, wobei die Steckzapfen (153, 154) in entsprechende Ausnehmungen (129) des sie tragenden Flansches (21, 91) und/oder der Trägerplatte (121, 122) einsteckbar sind und
- **dass** die Steckzapfen (153, 154) in den Ausnehmungen (129) beim Einstecken automatisch verrasten oder manuell mittels mindestens eines Fixierelementes (165) festgelegt werden, wobei das Fixierelement (165) senkrecht zur Mittellinie des jeweiligen Steckzapfens (153, 154) und parallel zu den Mittellinien (1, 2) der Flansche (21, 91) orientiert ist.

2. System gemäß Anspruch 1, **dadurch gekennzeichnet, dass** der jeweilige Flansch (21, 91) pro Befestigungszone (31, 32) mindestens ein Übertragungsmodul (211-252) oder mindestens eine Trägerplatte (121, 122) angeordnet werden kann.

3. System gemäß Anspruch 1, **dadurch gekennzeichnet, dass** bei der Verrastung oder der manuellen Fixierung die Festlegung der Steckzapfen (153, 154) mittels eines Keilgetriebes (162, 165) erfolgt, wobei durch die Klemmkraft des Keilgetriebes (162, 165) das zu befestigende Übertragungsmodul (211-252) gegen den ihn tragenden Flansch (21, 91) gezogen wird.

4. System gemäß Anspruch 1, **dadurch gekennzeichnet, dass** das einzelne Übertragungsmodul (211, 221, 231, 241, 251) des handhabungsgeräteseitigen Flansches (21) zum einen mindestens einen Versorgungsanschluss (133, 134, 142) aufweist, der in einer zur Mittellinie (1) des Flansches (21) normalen Ebene liegt und zum anderen mindestens einen Weitergabeanschluss (135, 136) aufweist, dessen Kontaktierungsrichtung (8) parallel zur Mittellinie (2) des Flansches (91) orientiert ist.

5. System gemäß Anspruch 1, **dadurch gekennzeichnet, dass** das einzelne Übertragungsmodul (212, 222, 232, 242, 252) des werkzeug- oder werkzeugaggregateseitigen Flansches (91) zum einen mindestens einen Abgabeanschluss (133, 134, 142) aufweist, der in einer zur Mittellinie (2) des Flansches (91) normalen Ebene liegt und zum anderen mindestens einen Übernahmeanschluss (135, 172) aufweist, dessen Kontaktierungsrichtung (8) parallel zur Mittellinie (2) des Flansches (91) orientiert ist.

6. System gemäß der Ansprüche 4 und 5, **dadurch gekennzeichnet, dass** der oder die Weitergabe- und Übernahmeanschlüsse (133, 134, 142) jeweils in der Nähe und zumindest annähernd auf der Höhe der Frontstirnflächen (23) der Flansche (21, 91) liegen.

7. System gemäß Anspruch 1, **dadurch gekennzeichnet, dass** die Übertragungsmodule (211-252) entweder Energie mittels elektrischem Strom, Druckluft, Vakuum oder Hydraulikflüssigkeit weiterleiten oder Signale elektrisch über Kontakte, optisch, akustisch oder über magnetische Felder übertragen.

## Claims

1. Tool interface adapter system (20) for detachably securing a tool or tool aggregate temporarily to handler apparatus (10),
- said system (20) comprising a flange (21) disposed on the handler side thereof, a flange (91) disposed on the tool or tool aggregate side thereof and at least one pair (211, 212; 221, 222; 231, 232; 241, 242; 251, 252) of transfer modules (211 - 252);
- with one transfer module (211, 221, 231, 241, 251) per pair (211, 212; 221, 222; 231, 223; 241, 242; 251, 252) arranged at the handler-side flange (21) and one transfer module (212, 222, 232, 242, 252) per pair arranged at the tool-or tool-aggregate-side flange (91);
- with the respective transfer modules (211 - 252) of said pairs (211, 212; 221, 222; 231, 232; 241, 242; 251, 252) being suited to exchange energy and/or signals among each other;
- with all said transfer modules (211 - 252) each having an adapter (151) by means of which they are secured rigidly and detachably to the flange (21, 91) supporting them directly or via a carrying plate (121, 122) on at least one securement zone (31, 32) provided in the radially outer surface (30) thereof; and
- with the adapters (151) of all said transfer modules (211 - 252) being similar in construction;
**characterized in that**
- each adapter (151) comprising two spaced-apart plug-in pegs (153, 154) oriented at right angles to the securement zone (31, 32), said plug-in pegs (153, 154) adapted to be introduced in corresponding recesses (129) of the flange (21, 91) and/or the carrying plate (121, 122) supporting them, and **in that**
- the plug-in pegs (153, 154) automatically snap into place in the recesses (129) when introduced or are secured manually by means of at least one fixing element (165), said fixing element oriented at right angles to the center line of the respective plug-in peg (153, 154) and parallel with the center lines (1, 2) of flanges (21, 91).

2. System as claimed in claim 1, **characterized in that** the respective flange (21, 91) is adapted to receive at least one transfer module (211 - 252) or at least one carrying plate (121, 122) per securement zone (31, 32).

3. System as claimed in claim 1, **characterized in that**, in case of snap-in or manual securement, the fixing of the plug-in pegs (153, 154) in place is effected by means of a wedge-type transmission (162, 165), with the clamping force of the wedge-type transmission (162, 165) acting to pull the transfer module (211 - 25) against the supporting flange (21, 91).

4. System as claimed in claim 1, **characterized in that** each individual transfer module (211, 221, 231, 242, 251) of the handler-side flange (21) has at least one supply connector (133, 134, 142) lying in a plane normal to the center line (1) of flange (21) and, on the other, at least one passing-on connection (135, 136) of which the contact means (8) is oriented parallel to the center line (2) of the flange (91).

5. System as claimed in claim 1, **characterized in that** each individual transfer module (212, 222, 232, 242, 252) of the tool- or tool-aggregate-side flange (91) includes at least one output connection (133, 134, 142) lying in a plane normal to the center line (2) of the flange (91) and having, on the other hand, at least one input connection (135, 172) of which the contact means (8) is oriented parallel to the center line (2) of the flange (91).

6. System as claimed in claim 4 or 5, **characterized in that** each said passing-on and receiving connection (133, 134, 142) is located near, or at least approximately at the height of, the faces (23) of flanges (21, 91).

7. System as claimed in claim 1, **characterized in that** the transfer modules (211 - 252) conduct energy by means of electrical current, pressurized air, vacuum or hydraulic fluid or conduct signals electrically through contacts, optically, acoustically or by magnetic fields.

## Revendications

1. Système d'interface d'outil (20) pour la fixation amovible temporaire d'un outil ou d'un groupe d'outils sur un dispositif de manipulation (10),
- le système (20) comportant une bride (21) placée du côté du dispositif de manipulation, une bride (91) placée du côté de l'outil ou du groupe d'outils et au moins une paire (211, 212 ; 221, 222 ; 231, 232 ; 241, 242 ; 251, 252) de modules de transmission (211-252),
- pour chaque paire (211, 212 ; 221, 222 ; 231, 232 ; 241, 242 ; 251, 252) un module de transmission (211, 221, 231, 2541, 251) étant disposé sur la bride (21) du dispositif de manipulation et un autre module de transmission (212, 222, 232, 242, 252) étant disposé sur la bride de l'outil ou du groupe d'outils (91),
- les modules de transmission (211-252) correspondants d'une paire de modules (211, 212 ; 221, 222 ; 231, 232 ; 241, 242 ; 251, 252) étant en mesure d'échanger entre eux de l'énergie et/ou des signaux,
- tous les modules de transmission (211-252) étant équipés chacun d'un adaptateur (151) permettant de les fixer de manière amovible directement ou de manière rigide à l'aide d'une plaque de support (121, 122) sur la bride (21, 91) qui les porte, dans au moins une zone de fixation (31, 32) située dans la surface radiale externe (30) de la bride.
- les adaptateurs (151) de tous les modules de transmission, (211-252) étant de construction identique,
**caractérisé en ce**
- **que** chaque adaptateur (151) est composé de deux tenons enfichables (153, 154) espacés, orientés verticalement par rapport à la zone de fixation (31, 32), les tenons enfichables (153, 154) pouvant s'enficher dans des évidements correspondants (129) de la bride (21, 91) qui les porte et/ou dans la plaque de support (121, 122) et
- **que** les tenons enfichables (153, 154) s'enclenchent automatiquement lors de l'engagement dans les évidements (129) ou qu'ils sont bloqués manuellement à l'aide d'au moins un élément de fixation (165), l'élément de fixation (165) étant orienté verticalement par rapport à la ligne médiane du tenon enfichable correspondant (153, 154) et parallèlement aux lignes médianes (1, 2) des brides (21, 91).

2. Système selon la revendication 1, **caractérisé en ce qu'**au moins un module de transmission (211-252) ou au moins une plaque de support (121, 122) peut être disposé dans chaque zone de fixation (31, 32) sur la bride respective (21, 91).

3. Système selon la revendication 1, **caractérisé en ce que**, lors de l'encliquetage ou de la fixation manuelle, le blocage des tenons enfichables (153, 154) se fait à l'aide d'un mécanisme à coin (162, 165), le module de transmission à fixer (211-252) étant tiré contre la bride qui le porte (21, 91) par la force de serrage du mécanisme à coin (162, 165).

4. Système selon la revendication 1, **caractérisé en ce que** chaque module de transmission (211, 221, 231, 241, 251) de la bride (21) placée du côté du dispositif de manipulation présente d'une part au moins un connecteur d'alimentation (133, 134, 142) qui se trouve dans un plan normal par rapport à la ligne médiane (1) de la bride (21) et d'autre part au moins un connecteur de transmission (135, 136) dont le sens de la mise en contact (8) est orienté parallèlement à la ligne médiane (2) de la bride (91).

5. Système selon la revendication 1, **caractérisé en ce que** chaque module de transmission (212, 222, 232, 242, 252) de la bride (91) placée du côté de l'outil ou du groupe d'outils présente d'une part au moins un connecteur de sortie (133, 134, 142) qui se trouve dans un plan normal par rapport à la ligne médiane (2) de la bride (91) et d'autre part au moins un connecteur d'entrée (135, 172) dont le sens de la mise en contact (8) est orienté parallèlement à la ligne médiane (2) de la bride (91).

6. Système selon les revendications 4 et 5, **caractérisé en ce que** le ou les connecteurs de transmission et de réception (133, 134, 142) se trouvent chacun à proximité ou au moins approximativement à la hauteur des faces avant (23) des brides (21, 91).

7. Système selon la revendication 1, **caractérisé en ce que** les modules de transmission (211-252) transmettent de l'énergie par courant électrique, par air comprimé, par le vide ou par liquide hydraulique ou transmettent des signaux électriquement par des contacts, optiquement, acoustiquement ou à l'aide de champs magnétiques.
